(19) Europäisches Patentamt
European Patent Office
Office européen des brevets

(11) EP 4 797 204 A1

(12) EUROPEAN PATENT APPLICATION

(43) Date of publication:
**26.08.2026 Bulletin 2026/35**

(21) Application number: **25159721.7**

(22) Date of filing: **24.02.2025**

(51) International Patent Classification (IPC):
***G06T 7/11*** *(2017.01)*

(52) Cooperative Patent Classification (CPC):
**G06T 7/11;** G06T 2207/10081; G06T 2207/10088; G06T 2207/20081; G06T 2207/20084; G06T 2207/30008

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **RIJKSUNIVERSITEIT GRONINGEN**
  **9712 CP Groningen (NL)**
- **Academisch Ziekenhuis Groningen**
  **9713 GZ Groningen (NL)**

(72) Inventors:
- **TEN BRINK, Reinier Simon Albert**
  **9713 GZ Groningen (NL)**
- **MEREMA, Bram Barteld Jan**
  **9713 GZ Groningen (NL)**
- **KRAEIMA, Joep**
  **9713 GZ Groningen (NL)**
- **PIJPKER, Peter Anne Jan**
  **9713 GZ Groningen (NL)**
- **WITJES, Max Johannes Hendrikus**
  **9713 GZ Groningen (NL)**

(74) Representative: **V.O.**
**P.O. Box 87930**
**2508 DH Den Haag (NL)**

# (54) USE OF A NEURAL NETWORK FOR AUTOMATICALLY RECONSTRUCTING A THREE-DIMENSIONAL BONE MODEL FROM MRI-SCAN DATA AND METHOD OF TRAINING THE SAME

(57) A method is provided herein for training a neural network to automatically reconstruct a three-dimensional bone model from MRI-scan data. The method that is performed for a plurality of human body part samples comprises preparing (S1M, S1C) a respective pair of an MRI-scan comprising MRI-scan data (M) and a CT-scan with CT-scan data (C). Ground truth bone segmentation data (Cs) is provided (S2C) for one or more regions of interest in the CT-scan. The ground truth bone segmentation data (Cs) is linked (S4C) with the CT-scan data to obtain enriched CT-scan data (Cl). The MRI-scan data is fused (S5) with the enriched CT-scan data (Cl) to obtain enriched MRI-scan data (Fa, Fb) including ground truth bone segmentation data. Then with the neural network to be trained tentative enriched MRI-scan data (Ft) is estimated (S7) from the MRI-scan data. The tentative enriched MRI-scan data (Ft) comprises the MRI-scan data and tentative bone segmentation data. A loss is computed(S8) that is indicative for a deviation between the tentative bone segmentation data and the ground truth bone segmentation data and backpropagated (S9). The trained neural network (20) obtained with the method is suitable for computing bone segmentation data from MRI-scan data.

S1M
S1C
M
C
S2M
S2C
Mr
Cs
S3M
S3C
Mrt
Csw
S4C
Cl
Fa
Fb
S6
Fm
S8
Ft
S7
L
S9

FIG 1



Processed by Luminess, 75001 PARIS (FR)

## Description

### BACKGROUND

3D virtual surgical planning (VSP) is a current standard of care for maxillofacial tumor surgery for several years already. Therewith the tumor margins and other soft tissue features can be accurately determined from MRI-based tumor segmentations, as MRI In a subsequent fibula free flap reconstruction the affected body parts are replaced by parts that are sculpted from a portion of the fibula of the patient. If a fibula free flap reconstruction is not possible, a patient specific implant may be milled from a bio compatible material, such as titanium, PEEK or a ceramic. A template is required to enable a proper milling of the replacement parts in these reconstruction approaches, which in turn relies on accurate bone segmentation image data. At present this segmentation data is obtained by additional CT-scans. This workflow requires rigid matching between MRI and CT, which introduces an error due to anatomical changes between scans.

The requirement for multiple imaging modalities further places additional burdens on patients, including increased time and radiation exposure from CT scans. Additionally, the need for extra scans causes strain on hospital resources, contributing to longer waiting times, higher healthcare costs and energy consumption.

### SUMMARY

It is an object of the present disclosure to at least mitigate the above-mentioned disadvantages. In accordance therewith a method for training a neural network is provided to automatically reconstruct a three-dimensional bone model from MRI-scan data. The trained neural network obtained therewith renders it possible to determine the 3D virtual surgical planning (VSP) with MRI as the single imaging modality.

Embodiments of the method for training comprise preparing a respective pair of an MRI-scan comprising MRI-scan data, i.e. a 3D sequence, and a CT-scan with CT-scan data. Then a ground truth bone segmentation data is obtained for at least one region of interest in the CT-scan corresponding to an affected bone. In case there are two or more bones affected that are movable relative to each other, respective ground truth bone segmentation data is obtained for the respective regions of interest in the CT-scan corresponding to the two or more bones. The ground truth bone segmentation data is linked with the CT-scan data to obtain enriched CT-scan data. Then the MRI-scan data is fused with the enriched CT-scan data to obtain enriched MRI-scan data including ground truth bone segmentation data. The neural network to be trained is used to estimate tentative enriched MRI-scan data from the MRI-scan data. The tentative enriched MRI-scan data comprises the MRI-scan data and tentative bone segmentation data. Estimating tentative enriched MRI-scan data can take place at any point in time once the MRI-scan data is available. It can be performed in parallel to obtaining enriched MRI-scan data. A training step of the neural network is then performed by backpropagating a loss that is indicative for a deviation between the tentative bone segmentation data and the ground truth bone segmentation data. These steps are repeated for a plurality of human body part samples.

In some embodiments the neural network is trained to process T1-MRI-scan data. Alternatively, another MRI imaging modality, such as T2-MRI, may be used. T1-imaging is however preferred as this scanning protocol can be performed faster than the T2-MRI protocol, therewith also reducing the risk of movement artifacts.

The neural network to be trained is typically of an encoder-decoder structure neural networks are available, such as SegNet, Transformer-based architectures, such as SegFormer and Swin-Unet and GAN-based models like Pix2Pix. It has been found that a U-type network is of a particular advantage for the present application in that it provides for a pixel-level segmentation accuracy in a relatively simple and efficient manner. A U-type network comprises a contraction path and an expansion path (encoder-decoder), which gives it the U-shaped architecture. The contracting path is a typical convolutional network that consists of repeated application of convolutions, each followed by a rectified linear unit (ReLU) and a max pooling operation. During the contraction, the spatial information is reduced while feature information is increased. The expansion pathway combines the feature and spatial information through a sequence of up-convolutions and concatenations with high-resolution features from the contracting path. An example of a U-type network is nnU-Net.

In embodiments of the method the ground truth bone segmentation data is provided as STL-data. Alternatively, an other data format may be used, such as OBJ (Wavefront Object Format), PLY (Polygon File Format), 3MF (3D Manufacturing Format), AMF (Additive Manufacturing File Format) and FBX (Autodesk Format). Nevertheless STL files are preferred as the format is widely adopted and it includes all essential information about the bone geometry with a minimum of overhead.

In embodiments of the method the segmentation data is wrapped. Therewith a continuous surface around the segmented bones is created. Wrapping smooths and refines the model while filling in small gaps or imperfections in the mesh.

The settings provided include:

Gap Closing Distance: 3.0 mm. This determines the maximum distance for closing small gaps in the model’s surface.

Gaps within this distance will be closed to create a smooth and continuous mesh.

Detail Level: 0.5 mm. This controls the level of detail retained during the wrapping process. A smaller value usually means higher fidelity to the original surface, preserving finer details.

Embodiments of the method may comprise resampling the MRI-scan data or the CT-scan data in order to match the resolution. For example, the MRI scans may be resampled to match the CT voxel size. Resampling may involve interpolation, e.g. linear interpolation.

For processing efficiency, the MRI-scan data and the enriched MRI-scan data may be transformed into image data according to a common image data format, e.g. be encoded as an nii.gz file.

In accordance with the above-mentioned object, the present disclosure further includes the use of a trained neural network obtained with embodiments of the method as presented above for computing bone segmentation data from MRI-scan data. The trained neural network in response to the MRI-scan data at its input generates the bone segmentation data, therewith enabling a 3D virtual surgical planning (VSP) without a separate CT-scan.

## BRIEF DESCRIPTION OF THE DRAWINGS

These and other aspects are described in more detail with reference to the drawing. Therein:

FIG. 1 schematically shows an embodiment of a method for training a neural network to automatically reconstruct a three-dimensional bone model from MRI-scan data.

FIG. 2A - 2D shows an overview of evaluation metrics for each anatomical structure on a test dataset.

Figures 3A, 3B and FIG. 4A - 4D provide a visual comparison between the MRI models and CT models in a first exemplary case.

Figures 5A, 5B and FIG. 6A - 6D provided a visual comparison between the MRI models and CT models in a second exemplary case.

FIG. 7 shows the median deviation of MRI bone models compared to CT bone model.

FIG. 8 schematically shows a use of the trained neural network.

FIG. 9 shows an exemplary U-type network in embodiments of the method disclosed herein.

FIG. 9A shows optional further elements to be combined with the neural network of FIG. 9.

FIG. 9B shows an exemplary stage of the neural network.

FIG. 9C shows another exemplary stage of the neural network.

## DETAILED DESCRIPTION OF EMBODIMENTS

Like reference symbols in the various drawings indicate like elements unless otherwise indicated.

In the following detailed description numerous specific details are set forth in order to provide a thorough understanding of the present invention. However, it will be understood by one skilled in the art that the present invention may be practiced without these specific details. In other instances, well known methods, procedures, and components have not been described in detail so as not to obscure aspects of the present invention.

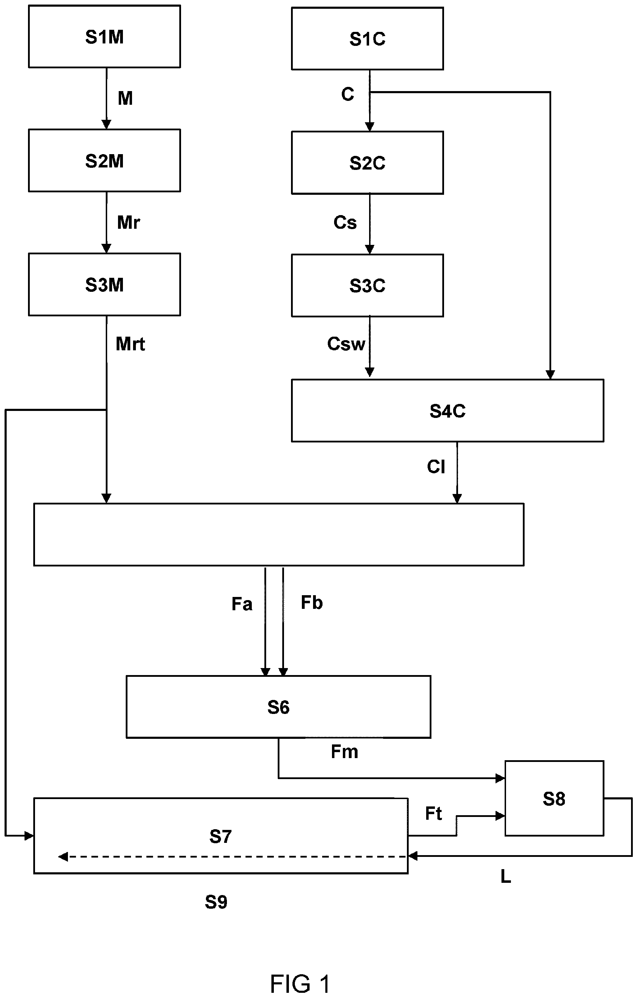

FIG. 1 schematically shows a method for training a neural network, such as a U-type network to automatically reconstruct a three-dimensional bone model from MRI-scan data. The steps as described in more detail below are performed for a plurality of human body part samples.

In step S1M, S1C a respective pair of an MRI-scan M and a CT-scan C is obtained. Herein, and in the sequel the suffixes M, C respectively indicate an operation that is specifically related to the MRI-scan and an operation that is specifically related to the CT-scan. The MRI-scan M and the CT-scan C respectively comprise MRI-scan data and CT-scan data.

By way of example in step S1M the MRI scans M are acquired in headfirst supine position with a 3.0 Tesla MRI scanner (SIEMENS Magnetom Prisma, Siemens Healthineers, Forchheim, Germany), with a 64-channel head coil. The scans M are obtained with the suprahyoid protocol in the T1-weigthed gradient echo (Dixon VIBE) sequence with contrast agent DOTAREM. In-phase scans are used within this study. The parameters of the MRI are: repetition time/echo time, 5.5/2.46 ms. The obtained MRI data M, provided in DICOM format, is a matrix of D=256 x W=264 x H=256 voxels, wherein the voxel size is 0.9 x 0.9 x 0.9 mm.

The CT scans C in step S1C may be acquired in headfirst supine position with either a Siemens SOMATOM Definition AS scanner, or a Siemens SOMATOM Force scanner. The resulting CT scan data C, provided in DICOM format, is a matrix of D=512 x W=580 x H=512 voxels, wherein the median voxel size is 0.6 x 0.6 x 0.6 mm.

In step S2C ground truth, GT, bone segmentation data Cs is obtained. In this example, the GT bone segmentation data Cs is obtained for two distinct regions of interest, ROI, in the CT-scan obtained in step S1C, i.e. the ROI of the mandible and the ROI of the cranium. In other examples the GT bone segmentation data is obtained for only one ROI or for more than

two ROI's. As specified above, this depends on the number of mutually independently movable bone parts that are affected. Different segmentation tools may be used dependent on the selected regions of interest. For example, the ground truth bone segmentation data is obtained by a manual segmentation of the CT scans C that is performed using Mimics 26.0 research software (Materialise, Leuven, Belgium). In this example, the mandible and cranium are segmented. For the orbita, the thin bone segment tool is utilized. Optionally for the NAI, a spline of 2 mm diameter is drawn through the mandibular canal until the mandibular foramen. After calculating the parts, all segmentations are exported to an standard tessellation language (STL) format Cs aligned within the coordinate system of the CT scan data C.

In the embodiment shown, a wrapping is applied in step S3C. Wrapping is performed with a gap closing distance of 3.0 mm and a detail level of 0.5 mm. In an example, step S3C is performed with the 3-Matic 18.0 research software (Materialise, Leuven, Belgium). The resulting wrapped segmentation models Csw are also exported as STL data aligned within the coordinate system of the CT scan data C.

In step S4C the wrapped ground truth bone segmentation data Csw obtained in step S3C is then linked with the original CT-scan data C to obtain enriched CT-scan data Cl. For this purpose Brainlab software (Brainlab, München, Germany) is applicable. The enriched CT scan data Cl, provided in DICOM+STL format, is a matrix of D=512 x W=580 x H=512 voxels, wherein the median voxel size is 0.6 x 0.6 x 0.6 mm.

In step S5 MRI-scan data is fused with the enriched CT-scan data to obtain enriched MRI-scan data that includes ground truth bone segmentation data. To enable this fusion one of the CT-scan data or the MRI-scan data may be resampled in case their image resolution differs. In the example shown in FIG. 1, the MRI scans are resampled in step S2M to 0.6x0.6x0.6 mm using linear interpolation. The resulting resampled MRI data Mr, provided in DICOM format, is a matrix of D=384 x W=395 x H=383 voxels, wherein the voxel size is 0.6 x 0.6 x 0.6 mm.

In the example shown, the resampled MRI-scan data Mr is transformed in step S3M into a compressed format Mrt. In the example shown, the resampled MRI scans Mr are compressed into the file format .nii.gz, which is a compressed version of the NIfTI file format. NIfTI, or Neuroimaging Informatics Technology Initiative, is a widely used format for storing neuroimaging data, such as MRI or CT scans. The .nii.gz format is preferred for its smaller file size while retaining all the data integrity of the original .nii file. In principle also other compressed image formats like jpeg, png, tiff, bmp may be used, but care should be taken that data integrity is sufficiently maintained. It may further be contemplated to directly use the DICOM image format as this is the general standard for medical image data. At present no ready to use interface is available for processing DICOM image data by the nnU neural network as used in the present investigation. However there are no fundamental reasons that would prevent training and using the nnU neural network to automatically reconstruct bone segmentation data on the basis of MRI-scan data provided in DICOM format.

In the example shown the fusion of the MRI-scan data Mrt with the enriched CT-scan data Cl in step S5 is performed twice.

Once the fusion is performed with the region of interest (ROI) set on the mandible during fusion, after which the mandible STL files Fa are exported and once the fusion is performed with the ROI set on the cranium, after which the cranium STL file is exported Fb. The exported STL data is aligned within the coordinate system of the MRI scan data Mrt.

In subsequent step S6 these STL files are transformed into nii.gz files Fm to serve as a mask in training. The resulting transformed data Fm comprises the wrapped ground truth segmentation data, aligned within the coordinate system of the MRI scan data Mrt, for all ROI's, in this case the ROI of the mandible and the ROI of the cranium.

In step S7, as part of the training procedure, tentative enriched MRI-scan data Ft comprising the MRI-scan data and tentative bone segmentation data is estimated with the neural network to be trained. The tentative enriched MRI-scan data Ft, provided in nii.gz format, is a matrix of D=384 x W=395 x H=383 voxels, wherein the voxel size is 0.6 x 0.6 x 0.6 mm. During the training procedure the tentative enriched MRI-scan data Ft of the neural network will more and more accurate approach the wrapped ground truth segmentation as specified in the transformed data Fm.

In order to compute the tentative enriched MRI-scan data Ft, the MRI-scan data Mrt is provided at the input of the neural network to be trained and the tentative enriched MRI-scan data Ft is obtained at the output of the neural network. A training step is then performed by computing a loss L in step S8 that is indicative for a deviation between the tentative bone segmentation data as comprised in the tentative enriched MRI-scan data Ft and the ground truth bone segmentation data comprised in the mask Fm and the loss is backpropagated in step S9.

As mentioned above, the steps of FIG. 1 are performed for a plurality of human body part samples.

In an example, training is performed with a dataset comprising 100 paired T1 MRI scans and CT scans of oncology patients from the department of Oral and Maxillofacial Surgery of the University Medical Center Groningen (UMCG), The Netherlands. The included patients are diagnosed with a tumor in the oral cavity region with a planned mandibulectomy or maxillectomy. Patients with implants in their mouth are excluded since this causes major artifacts in the MRI. The dataset is split into 80 scans for training and 20 scans for testing.

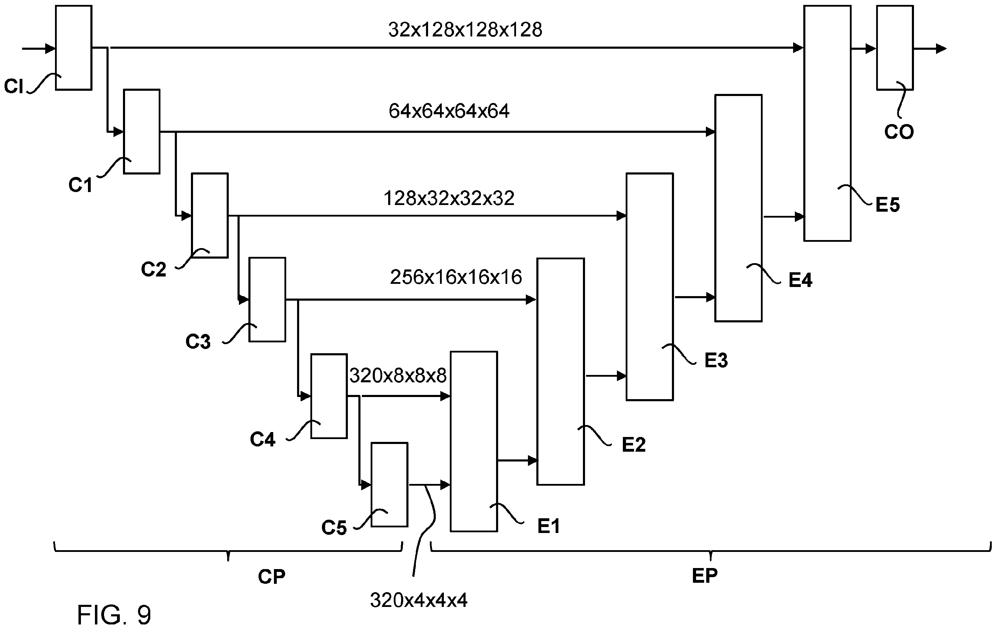

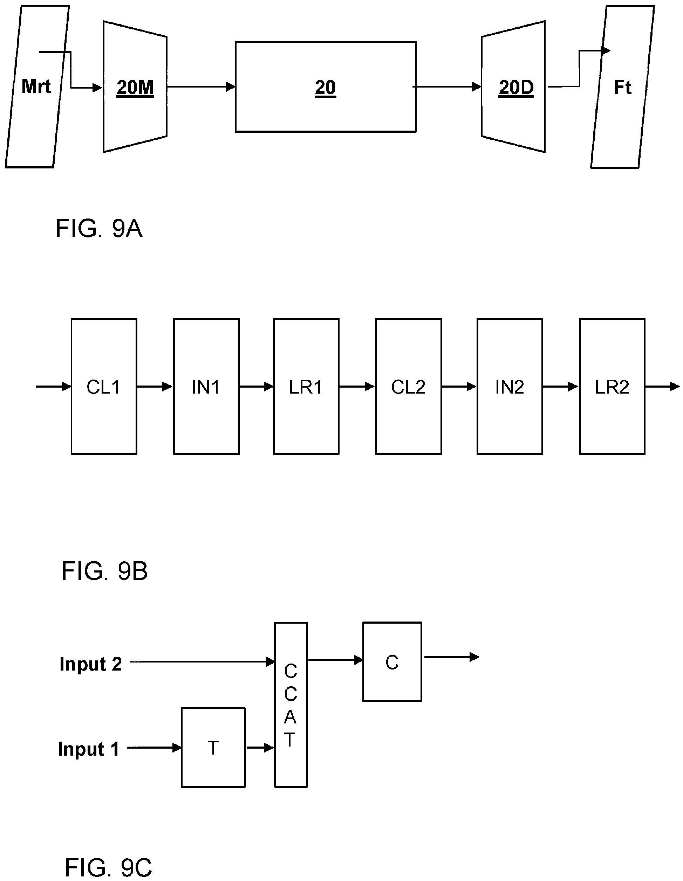

In one example the nnU-Net convolutional neural network is selected as the framework for automatic segmentation. nnU-Net has a contraction path and an expansion path (encoder-decoder), each with 5 stages as specified in more detail below with reference to FIG. 9, 9B, 9C.

The model is implemented on an Intel® Core™ i9-10980XE CPU with 64 GB RAM and a graphic card of NVIDIA

RTX A4000 (NVIDIA Corporation, USA) with 16 GB GDDR6 memory. 80/20 split for training and validation is used. Training is done using the 3D full resolution configuration with 5-fold cross validation and 1000 epochs per fold using the cross-entropy dice loss function.

The following classification metrics are used to evaluate the performance of the model on the test dataset:

$$\text{Dice: } DSC = \frac{2|X \cap Y|}{|X| + |Y|}$$

$$\text{Intersection over Union: } IoU = \frac{|X \cap Y|}{|X| \cup |Y|}$$

$$\text{Precision: } Precision = \frac{True\ positives}{True\ positives + False\ positives}$$

$$\text{Recall: } Recall = \frac{True\ positives}{True\ positives + False\ negatives}$$

The MRI derived bone models are matched to the original CT bone model using the global registration tool in 3-Matic. To compare the CT and MRI-based bone models, median deviation is calculated and distance maps generated using part-to-part comparison in 3-Matic. Only overlapping bone regions on both CT and MRI scans are considered. A deviation of ≤1 mm between the CT and MRI is deemed acceptable for clinical use.

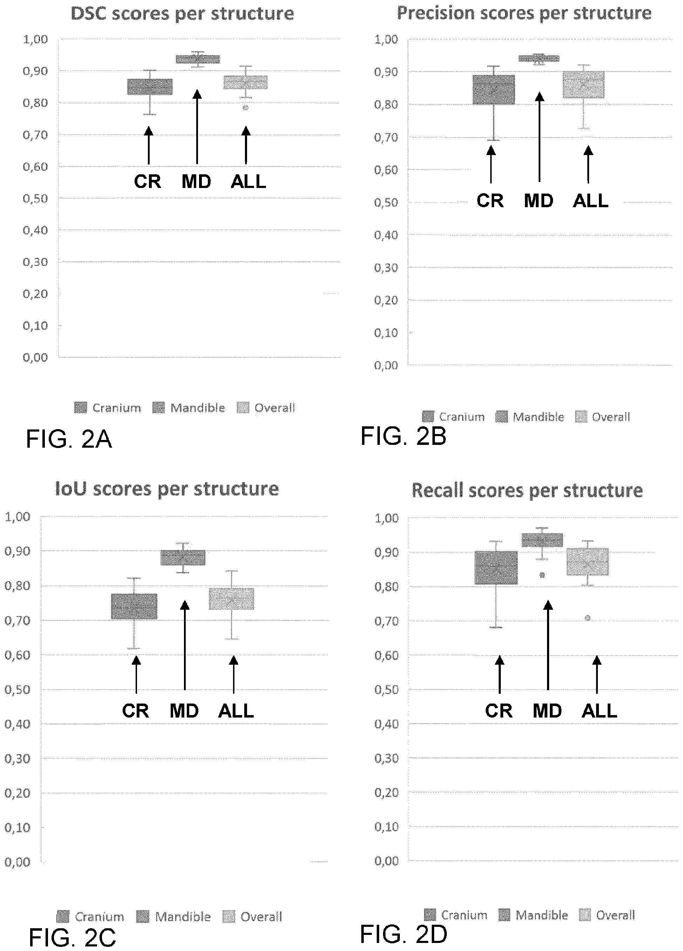

It was found that the trained model achieves overall mean Dice similarity coefficient of 0.86 (SD ±0.03, range 0.78-0.91), Intersection over Union of 0.76 (SD ±0.05, range 0.64-0.84), precision of 0.86 (SD ±0.05, range 0.72-0.92) and recall of 0.86 (SD ±0.05, range 0.71-0.93) on the test dataset. A summary of the evaluation metrics for each anatomical structure on the test dataset is presented in Figures 2A - 2D and the subsequent table.

Therein FIG. 2A - 2D respectively shows the Median Dice scores, the median precision scores, the median intersection over union and the median recall scores per structure (Cranium CR, Mandible MD) and all structures combined (ALL).

The median deviation between the CT and MRI based bone models is 0.21 mm (IQR 0.05) for the mandible and is 0.30 mm (IQR 0.05) for the cranium

| Structure / Metric | Mandible | Cranium | Overall |
|---|---|---|---|
| **Dice (SD)** | 0.94 (±0.01) | 0.84 (±0.03) | 0.86 (±0.03) |
| **IoU (SD)** | 0.88 (±0.02) | 0.73 (±0.05) | 0.76 (±0.05) |
| **Precision (SD)** | 0.94 (±0.01) | 0.84 (±0.06) | 0.86 (±0.05) |
| **Recall (SD)** | 0.93 (±0.03) | 0.85 (±0.06) | 0.86 (±0.05) |

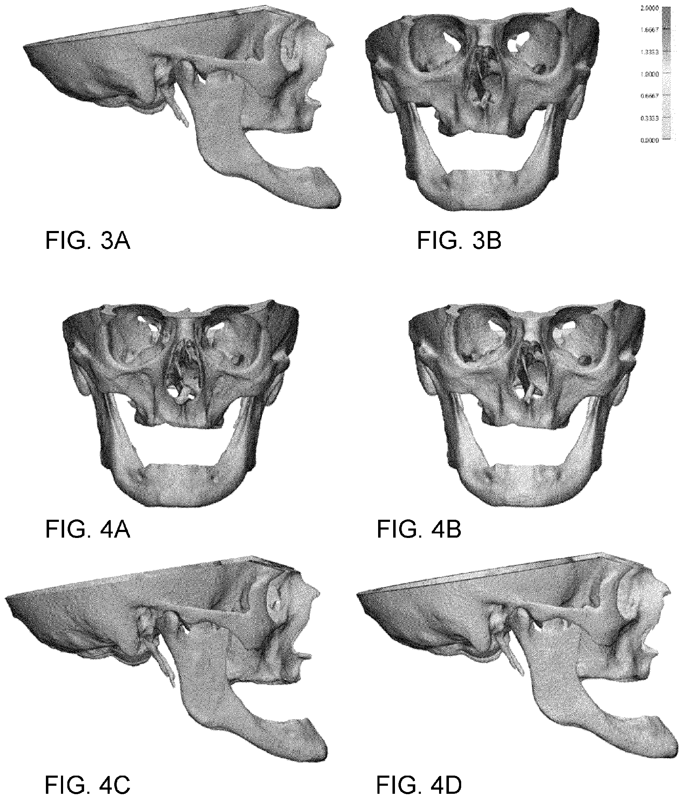

Visual comparison between the MRI models and CT models is presented in Figures 3A, 3B and FIG. 4A - 4D.

FIG. 3A, 3B show for an example of an edentulous patient a deviation of an MRI based and a CT-based bone model. The color scale indicates that the deviation is generally below 1 mm. Only exceptionally deviations up to 2 mm occur.

FIG. 4A and 4C respectively show a front view and a side view of the bone model of the edentulous patient generated on the basis of a CT image. FIG. 4B and 4D show a front view and a side view of the bone model of the edentulous patient generated on the basis of an MRI image using the trained neural network.

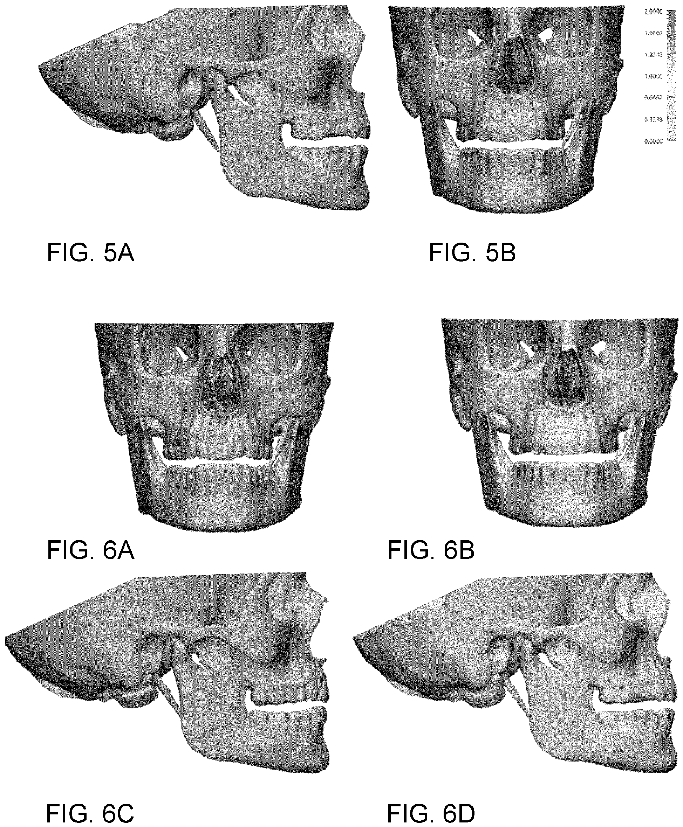

Likewise Figures 5A, 5B and FIG. 6A - 6D present a visual comparison between the MRI models and CT models for a dentulous patient.

FIG. 5A, 5B shows the deviation of an MRI based and a CT-based bone model for the dentulous patient. The color scale indicates that the deviation is generally below 1 mm. Only exceptionally deviations up to 2 mm occur.

The most significant deviations between the CT and MRI-derived bone models occur in the dorsal part of the cranium, the mandibular condyles, and the teeth. The missing part of the cranium is likely due to differences in scan coverage. It could potentially be improved by manually adding this segmentation to the MRI or building a dataset where the CT fully covers the same area as the MRI.

Deviation in the condyles could be explained by the fact that it is difficult to differentiate the condyle from the glenoid fossa. The deviation in the teeth can be explained by several aspects. First, the segmentation of the teeth from the CT contains artefacts due to the presence of tooth fillings. Besides, teeth are relatively small and the original MRI scan has a voxel size of 0.9 mm, thus not capturing the entire tooth. Resampling the scan does not add this data to the scan. All three of these factors do not affect the clinical usability of the model, as these areas are not essential for designing surgical guides or patient-specific implants.

FIG. 6A and 6C respectively show a front view and a side view of the bone model of the dentulous patient generated on the basis of a CT image. FIG. 6B and 6D show a front view and a side view of the bone model of the dentulous patient generated on the basis of an MRI image using the trained neural network.

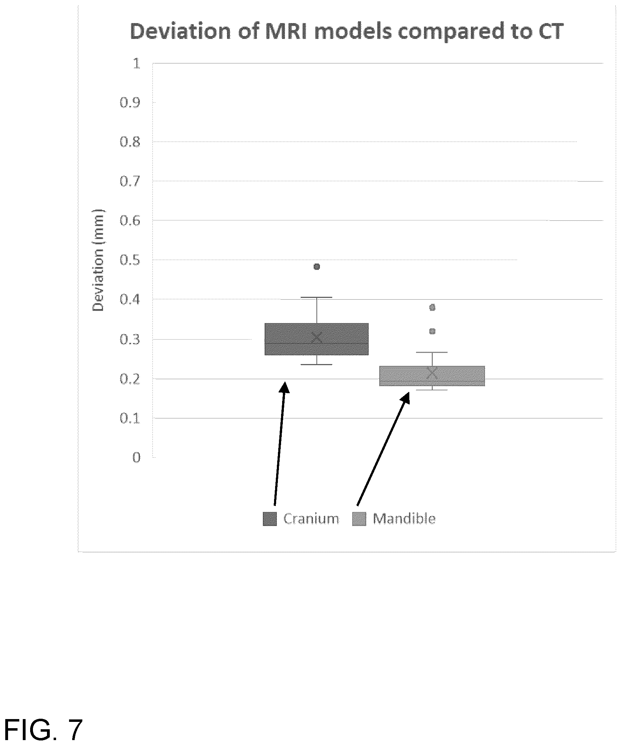

FIG. 7 further shows the median deviation of MRI bone models compared to CT bone model.

The inventive approach disclosed herein, although having been specifically demonstrated for generating bone models of the cranium and the mandible, can be analogously extended to other anatomical regions, provided paired CT and MRI scans are available.

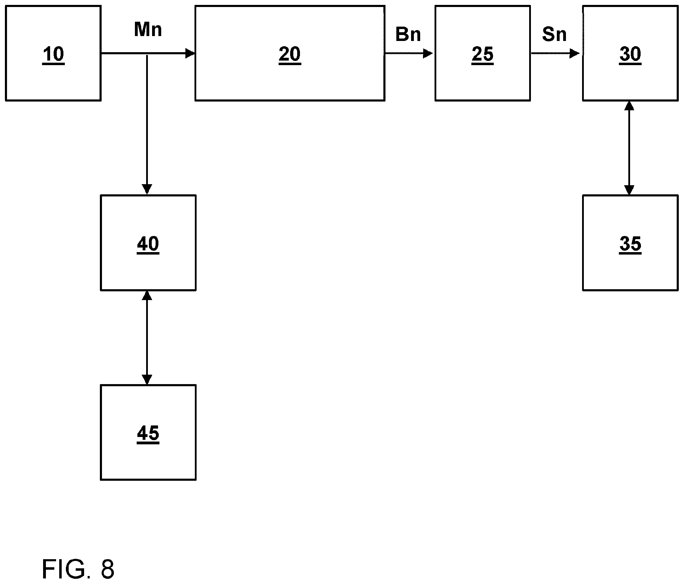

FIG. 8 schematically shows a use of the trained neural network 20. Therein an MRI-image Mn is obtained with an MRI imaging tool 10 and provided at the input of the trained neural network 20. In response thereto, the trained neural network 20 computes wrapped bone segmentation data Bn.

These in turn may be used as input for a 3D-printer 30 with which cutting guides may be printed to be used for milling replacements for affected body parts from the patient's bone, e.g. from the fibula and/or for milling a patient specific implant from a bio compatible material. The MRI-image Mn is further provided to a contour analysis tool 40, with which the tumor margins and other soft tissue features can be accurately determined. In the example shown the 3D-printer 30 and the contour analysis tool 40 have a respective interface 35, 45 for facilitating human control.

It is noted that in case the MRI-image Mn is provided in a compressed format, such as Nii.gz, then the network output Bn is subjected to a decompression step. In the embodiment shown, this this decompression is performed by a decompression unit 25 that provides decompressed wrapped bone segmentation data Sn in a format suitable for driving the 3D printer or milling device 30, e.g. in STL format. Alternatively, the wrapped bone segmentation data serves as input for a virtual chirurgical planning wherein a medical specialist prepares the input for the milling device or 3D printer 30.

FIG. 9 shows an exemplary U-type network as used in the present investigation. The U-type network shown in FIG. 9 is configured to process input image data configured as 32 channels at a resolution of 128x128x128 (DxWxH). As noted above, the available image data Mrt is provided as D=384 x W=395 x H=383 voxels. As shown in FIG. 9A, to overcome the difference in resolution, sections at the proper resolution of 128x128x128 are sampled by multiplexing element 20M to be provided to the neural network 20 and the output Ft is reconstructed from the output of the neural network 20 by a demultiplexing element 20D. Typically the sections to be processed are mutually partially overlapping, e.g. by sampling the sections with a stride of 64x64x64. A cosine window or the like may be applied to avoid edge effects.

The exemplary network comprises an input stage CI, contraction stages C1-C5, expansion stages E1-E5 and an output stage CO.

As shown in FIG. 9B, the contraction stages C1-C5 each subsequently comprise a first convolutional layer CL1, a first instance normalization layer IN1, a first leaky ReLu layer RL1, a second convolutional layer CL2, a second instance normalization layer IN2, and a second leaky ReLu layer RL2.

In the contraction stages, the first and the second convolutional layer CL1, CL2 respectively have a stride of 2x2x2 and a stride of 1x1x1. Both convolutional layers have a 3x3x3 kernel. The first convolutional layer CL1 of each contraction stage provides for a down sampling as shown below.

| Stage | ChxDxWxH |
|---|---|
| C1 | 64x64x64x64 |
| C2 | 128x32x32x32 |
| C3 | 256x16x16x16 |
| C4 | 320x8x8x8 |
| C5 | 320x4x4x4 |

In the embodiment shown in FIG. 1, the neural network also comprises an input stage CI that extracts features of the input data without downsampling. In one example the input stage CI is a single convolutional layer. In another embodi-

ment as used in the present investigations the input stage CI has the same architecture as the contraction stages, as shown in FIG. 9B, but contrary to the contraction stages its first convolutional layer CL1 has a stride of 1x1x1. The dimension of the data throughout the input stage CI is 32(Ch) x 128(D) x 128(W) x 128(H).

As shown in FIG. 9C the expansion stages E1 to E5 each comprise a transverse convolutional layer T that spatially expands data from a first input, a concatenation layer CCAT that concatenates the output of the transverse convolutional layer and a convolutional unit C that processes the output of the concatenation layer. The transverse convolutional layer T in the embodiment of the neural network as used in the present investigation has a kernel size of 2x2x2 and a stride of 2x2x2. The transverse convolutional layer T provides for a doubling of spatial resolution and a reduction of the number of channels. In the stages E1 to E5 the dimensions of input and output of the transverse convolutional layer T is specified as follows:

| Stage | Input | Output |
|---|---|---|
| E1 | 320x4x4x4 | 320x8x8x8 |
| E2 | 320x8x8x8 | 256x16x16x16 |
| E3 | 256x16x16x16 | 128x32x32x32 |
| E4 | 128x32x32x32 | 64x64x64x64 |
| E5 | 64x64x64x64 | 32x128x128x128 |

The convolutional unit C provides for a reduction of the number of channels. In the embodiment of the neural network in the present investigation the convolutional unit C has the same architecture as that of the contraction stages as shown in FIG. 9B. However contrary to the contraction stages its first convolutional layer CL1 has a stride of 1x1x1. The number of channels is reduced by a factor of two, which may be said to compensate the effect of doubling the number of channels occurring in the concatenation.

As shown in FIG. 9, the inputs of the expansion stages are coupled as follows.

| Stage | Input 1 | Input 2 |
|---|---|---|
| E1 | C5 | C4 |
| E2 | E1 | C3 |
| E3 | E2 | C2 |
| E4 | E3 | C1 |
| E5 | E4 | CI |

The neural network as used herein further has an output stage CO, herein provided as a convolutional layer with kernel size 1x1x1 and stride 1x1x1. The output stage outputs the final bone segmentation map.

Whereas in the examples presented above specific dimensions are mentioned, it will be clear that these are not limiting. Dependent on the case data dimensions may be selected differently. For example for applications wherein the region of interest is small it would suffice to have smaller image dimensions. On the other hand when more computation power comes available and more powerful medical imaging tools are developed it is likely that higher resolution image data can be processed. Some steps in the examples presented above are optional. For example, resampling the MRI-scan data or the CT-scan data is not necessary if they are obtained with the same resolution.

Also various modification of the neural network as present in FIG. 9, 9B and 9C are possible depending on the level of accuracy that is required and the available computational facilities. For example it may be contemplated to configure the neural network to process data at an increased resolution, e.g. to 256x256x256 or 512x512x512. This may be combined with an increased number of stages. For example for each doubling of the resolution an additional contraction stage as shown in FIG. 9B and an additional expansion stage as shown in FIG. 9C may be added. Also the number of channels may be changed. Instead of two convolutional layers per stage C, one deeper convolution per block (using dilated convolutions or residual connections) could reduce complexity while preserving spatial awareness. As an alternative for the transpose convolution T in the expansion stages E, Using simple bilinear upsampling + convolution may simplify the network while maintaining accuracy. The instance normalization in the stages C is useful for particularly for small batch sizes. If training with larger batches, batch normalization or even skipping normalization might suffice. It may further be contemplated to replace the double set of layers in the contraction stages C with a single set of layers (one convolutional layer, optionally one instance normalization layer and one ReLu layer). Still further for the purpose of

reducing computation cost standard convolutions could be replaced with depthwise separable convolutions (as in MobileNet). Various measures may be combined. For example it is an option to increase the resolution with which the neural net can process the input data to that of the image data Mrt, to obviate the segmentwise processing while still keeping the computational cost modest by one or more simplifying measures specified above.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

**1.** A method for training a neural network to automatically reconstruct a three-dimensional bone model from MRI-scan data, the method comprising for a plurality of human body part samples:

preparing (S1M, S1C) a respective pair of an MRI-scan comprising MRI-scan data (M) and a CT-scan with CT-scan data (C);
providing (S2C) ground truth bone segmentation data (Cs) for one or more regions of interest in the CT-scan;
linking (S4C) the ground truth bone segmentation data (Cs) with the CT-scan data to obtain enriched CT-scan data (Cl);
fusing (S5) the MRI-scan data with the enriched CT-scan data (Cl) to obtain enriched MRI-scan data (Fa, Fb) including ground truth bone segmentation data;
with the neural network to be trained estimating (S7), from the MRI-scan data, tentative enriched MRI-scan data (Ft) comprising the MRI-scan data and tentative bone segmentation data;
computing (S8) a loss indicative for a deviation between the tentative bone segmentation data and the ground truth bone segmentation data;
backpropagating (S9) the loss.

**2.** The method according to claim 1, wherein the MRI-scan data (M) is T1-MRI-scan data.

**3.** The method according to claim 1 or 2, wherein the neural network is a U-type network, such as nnU-Net.

**4.** The method according to claim 1, 2 or 3, wherein the ground truth bone segmentation data (Cs) is provided (S2C) as STL-data.

**5.** The method according to one of the preceding claims, further comprising the step of wrapping (S3C) the segmentation data (Cs).

**6.** The method according to one of the preceding claims, further comprising the step of resampling (S2M) the MRI-scan data (M) or the CT-scan data.

**7.** The method according to one of the preceding claims, further comprising the step of transforming (S3M, S6) the MRI-scan data and the enriched CT-scan data into image data according to a common image data format.

**8.** Use of a trained neural network (20) obtained with the method according to one of the preceding claims, for computing bone segmentation data from MRI-scan data.

S1M
M
S2M
Mr
S3M
Mrt
S1C
C
S2C
Cs
S3C
Csw
S4C
Cl
Fa
Fb
S6
Fm
S8
Ft
S7
L
S9

FIG 1

DSC scores per structure
1,00
0,90
0,80
0,70
0,60
0,50
0,40
0,30
0,20
0,10
0,00
CR
MD
ALL
Cranium
Mandible
Overall

FIG. 2A

Precision scores per structure
1,00
0,90
0,80
0,70
0,60
0,50
0,40
0,30
0,20
0,10
0,00
CR
MD
ALL
Cranium
Mandible
Overall

FIG. 2B

IoU scores per structure
1,00
0,90
0,80
0,70
0,60
0,50
0,40
0,30
0,20
0,10
0,00
CR
MD
ALL
Cranium
Mandible
Overall

FIG. 2C

Recall scores per structure
1,00
0,90
0,80
0,70
0,60
0,50
0,40
0,30
0,20
0,10
0,00
CR
MD
ALL
Cranium
Mandible
Overall

FIG. 2D

2.0000
1.6667
1.3333
1.0000
0.6667
0.3333
0.0000

FIG. 3A

FIG. 3B

FIG. 4A

FIG. 4B

FIG. 4C

FIG. 4D

2.0000
1.6667
1.3333
1.0000
0.6667
0.3333
0.0000

FIG. 5A

FIG. 5B

FIG. 6A

FIG. 6B

FIG. 6C

FIG. 6D

Deviation of MRI models compared to CT
Deviation (mm)
1
0.9
0.8
0.7
0.6
0.5
0.4
0.3
0.2
0.1
0
Cranium
Mandible

FIG. 7

10
Mn
20
Bn
25
Sn
30
40
35
45

FIG. 8

32x128x128x128
64x64x64x64
128x32x32x32
256x16x16x16
320x8x8x8
320x4x4x4
CI
C1
C2
C3
C4
C5
CO
E1
E2
E3
E4
E5
CP
EP

FIG. 9

Mrt
20M
20
20D
Ft

FIG. 9A

CL1
IN1
LR1
CL2
IN2
LR2

FIG. 9B

Input 2
Input 1
T
CCAT
C

FIG. 9C

Europäisches
Patentamt
European
Patent Office
Office européen
des brevets

# EUROPEAN SEARCH REPORT

Application Number
EP 25 15 9721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NIE DONG ET AL: "Segmentation of Craniomaxillofacial Bony Structures from MRI with a 3D Deep-Learning Based Cascade Framework", 7 September 2017 (2017-09-07), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 266 - 273, XP047437110, ISBN: 978-3-540-74549-5 [retrieved on 2017-09-07] * abstract * * bridging paragraph; page 267 - page 268 * * Section 2.1 Data Acquisition and Preprocessing; page 268 - page 269 * * Section 2.4 Implementation details; page 270 * * figures 1-3 * ----- | 1-8 | INV. G06T7/11 |
| | | | TECHNICAL FIELDS SEARCHED (IPC) |
| A | PREDA FLAVIA ET AL: "Deep convolutional neural network-based automated segmentation of the maxillofacial complex from cone-beam computed tomography:A validation study", JOURNAL OF DENTISTRY, ELSEVIER, AMSTERDAM, NL, vol. 124, 21 July 2022 (2022-07-21), XP087154276, ISSN: 0300-5712, DOI: 10.1016/J.JDENT.2022.104238 [retrieved on 2022-07-21] * abstract * * Section 2.2.1 Upper skull; page 3, left-hand column * ----- | 1-8 | G06T |

-/--

1

The present search report has been drawn up for all claims

| Place of search | Date of completion of the search | Examiner |
|---|---|---|
| Munich | 11 July 2025 | Rusu, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 25 15 9721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/257345 A1 (LIU XINGYU [CN]; BEIJING LONGWOOD VALLEY MEDICAL TECH CO LTD [CN]) 15 December 2022 (2022-12-15)<br>* abstract *<br>* paragraph [0064] *<br>* paragraph [0069] *<br>----- | 1-8 | |
| | | | TECHNICAL FIELDS SEARCHED (IPC) |

The present search report has been drawn up for all claims

1

| Place of search | Date of completion of the search | Examiner |
|---|---|---|
| Munich | 11 July 2025 | Rusu, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 9721

This annex lists the patent family members relating to the patent documents cited in the above-mentioned European search report. The members are as contained in the European Patent Office EDP file on The European Patent Office is in no way liable for these particulars which are merely given for the purpose of information.

11-07-2025

| Patent document cited in search report | Publication date | Patent family member(s) | Publication date |
|---|---|---|---|
| WO 2022257345 A1 | 15-12-2022 | CN 113506334 A | 15-10-2021 |
| | | WO 2022257345 A1 | 15-12-2022 |

EPO FORM P0459

For more details about this annex : see Official Journal of the European Patent Office, No. 12/82